# EUROPÄISCHE PATENTSCHRIFT

(11) **EP 1 539 553 B1**
(45) Veröffentlichungstag und Bekanntmachung des Hinweises auf die Patenterteilung: **03.05.2006**
(21) Anmeldenummer: 03757850.7
(22) Anmeldetag: 16.09.2003
(51) Int. Cl.: B60T 7/12

(54) **VERFAHREN UND VORRICHTUNG ZUM VERHINDERN EINES UNBEABSICHTIGTEN WEGROLLENS EINES STILLSTEHENDEN FAHRZEUGES**
METHOD AND DEVICE FOR PREVENTING A STATIONARY VEHICLE FROM UNINTENTIONALLY ROLLING AWAY
PROCEDE ET DISPOSITIF POUR EVITER UNE DERIVE INTEMPESTIVE D'UN VEHICULE IMMOBILISE

(30) Priorität: 21.09.2002 DE 10244024
(43) Veröffentlichungstag der Anmeldung: 15.06.2005
(73) Patentinhaber: ZF FRIEDRICHSHAFEN Aktiengesellschaft, 88038 Friedrichshafen (DE)
(72) Erfinder: WERNER, Erwin, 88045 Friedrichshafen (DE)
(86) Internationale Anmeldenummer: PCT/EP2003/010275
(87) Internationale Veröffentlichungsnummer: WO 2004/028876

(56) Entgegenhaltungen:
- WO-A-97/16333
- DE-A- 3 507 330
- DE-A- 10 061 006
- US-A- 4 667 471

## Beschreibung

Die Erfindung betrifft ein Verfahren sowie eine Vorrichtung zum Verhindern eines unbeabsichtigten Wegrollens eines stillstehenden Fahrzeuges nach der im Oberbegriff von Anspruch 1 näher definierten Art, siehe Dokument DE-35 07 330.

Aus dem Stand der Technik sind viele Verfahren sowie Vorrichtungen zum Verhindern eines unbeabsichtigten Wegrollens eines stillstehenden Fahrzeuges bekannt, die auf unterschiedliche Art und Weise dieses Wegrollen verhindern sollen.

So wird in der DE 101 51 846 A1 ein Verfahren sowie eine Vorrichtung zum Verhindern eines unbeabsichtigten Wegrollens eines stillstehenden Fahrzeuges beschrieben, das es einem Fahrer ermöglicht, eine Haltefunktion, mit der ein Fahrzeug am unbeabsichtigten Wegrollen durch Einspeisung eines Bremsdrucks gehindert wird, durch einfache Art und Weise zu deaktivieren. Dabei wird zunächst bei stillstehendem Fahrzeug durch Betätigung des Bremspedals ein Haltemodus aktiviert, in welchem wenigstens eine Radbremseinrichtung des Fahrzeugs zur Erzeugung einer Bremskraft so angesteuert wird, daß das Fahrzeug automatisch im Stillstand gehalten wird und nicht unbeabsichtigt wegrollt. Dieser Haltemodus kann durch eine Betätigung des Bremspedals deaktiviert werden.
Durch ein Festbremsen des Fahrzeuges am Berg durch die nach dem Stand der Technik beschriebene Funktion kann eine Gefahrensituation entstehen, wenn der Fahrer den Fahrerarbeitsplatz verlässt und sich darauf verlässt, dass das Fahrzeug durch die Anfahrhilfe zuverlässig festgebremst wird. Bei einem Fehler in der Anfahrprozedur kann es beispielsweise zu einem Zurückrollen des Fahrzeugs kommen, wenn eine Kupplung nicht wie vorgesehen geschlossen wird. Weiterhin muß der Fahrer diese Haltefunktion durch nochmaliges verstärktes Betätigen des Bremspedals erst aktivieren, was ein zusätzliches Sicherheitsrisiko birgt.

Der vorliegenden Erfindung liegt die Aufgabe zugrunde ein Verfahren sowie eine Vorrichtung zum Verhindern eines unbeabsichtigten Wegrollens eines stillstehenden Fahrzeuges darzustellen, die immer aktiviert ist, wenn das Fahrzeug steht und die es ohne hohen technischen Aufwand ermöglicht bei einer eventuell auftretenden Fehlfunktion in der Anfahrprozedur, beispielsweise wenn eine Kupplung nicht wie erwartet geschlossen wird, eine Haltefunktion zu aktivieren.

Die der Erfindung zugrundeliegende Aufgabe wird durch ein, auch die kennzeichnenden Merkmale des Hauptanspruchs aufweisendes, gattungsgemäßes Verfahren und eine Vorrichtung zum Verhindern eines unbeabsichtigten Wegrollens eines stillstehenden Fahrzeuges gelöst.

Durch die Verwendung des Kupplungsweges als Kenngröße, der ein Maß für das aktuelle Übernahmemoment der Kupplung ist, die auch automatisiert sein kann, kann die Bremse abhängig von einem definierten Lösekriterium geöffnet werden. Die Löseschwelle kann unabhängig von fahrzeug- und fahrspezifischen Kriterien, wie beispielsweise Fahrzeuggewicht oder Steigung, eingestellt werden. Die Bremse wird folglich dann geöffnet, wenn der Kupplungsweg einen Festwert überschreitet. Abhängig vom Betriebszustand wie z. B. beim Anfahren oder Rangieren können die Festwerte so definiert werden, daß im jeweiligen Betriebszustand das Lösekriterium optimal definiert ist. Durch dieses Lösekriterium wird automatisch gewährleistet, daß das Fahrzeug nicht nach hinten wegrollt, wenn die Funktion deaktiviert wird. Weiterhin vorteilhaft ist bei der vorliegenden Erfindung, daß bei einer eventuellen Fehlfunktion in der Anfahrprozedur, die dazu führt, daß die Kupplung nicht wie erwartet geschlossen wird, obwohl das Fahrpedal betätigt wird, die Haltefunktion aktiv bleibt. Der eingestellte Bremsdruck kann über ein Rückschlagventil jederzeit erhöht werden. Weiterhin genügt ein leichter Druck auf das Bremspedal um das Fahrzeug festzuhalten. Um einem Verlassen des Fahrzeuges durch den Fahrzeugführer bei nicht betätigter Feststellbremse entgegenzuwirken, kann die Haltefunktion mit einem definierten Zeitfenster ausgestattet werden. Dadurch kann die Bremse auch dann gelöst werden, wenn für eine vorher definierte Zeitspanne kein Fußpedal betätigt wird. Diese Zeitspanne wird vorteilhafterweise so eingestellt, daß der Fahrzeugführer das Fahrzeug nicht verlassen kann, ohne daß die Bremse vorher gelöst wird und damit das Fahrzeug langsam zurückrollt. Wird folglich ein Fahrzeugstillstand erkannt, das Getriebe jedoch nicht in der Stellung Neutral steht und das Bremspedal betätigt wird, dann wird der eingesteuerte Bremsdruck nach Lösen des Bremspedals so lange festgehalten, bis die Kupplung eine definierte Position erreicht hat. Wird nach dem Lösen des Bremspedals das Fahrpedal nicht betätigt, so löst die Bremse nach einer definierten Zeitspanne.

Die Haltefunktion kann sowohl ein Ventil über einen Digitalausgang ansteuern, als auch eine CAN-Botschaft generieren, die von entsprechend ausgerüsteten EBS-Systemen interpretiert und umgesetzt werden kann. Die Erkennung ob ein solches System vorhanden ist und die damit verbundene Auswahl der Ein- und Ausgangsgrößen kann automatisch erfolgen. Um einen möglichst großen Komfort beim Lösen der Bremse zu erreichen, d. h. Entlastungsschläge zu vermeiden und ein Zurückrollen des Fahrzeuges durch ein zu frühes Lösen der Bremse zu verhindern, kann das exakte Haltemoment bestimmt werden. Dazu wird in der Getriebesteuerung der Fahrwiderstand bestimmt, in den die Kenngrößen aktuelles Fahrzeuggewicht und momentane Steigung der Fahrbahn eingehen. Daraus kann das momentan erforderliche Haltmoment berechnet werden. Da sich der Kupplungsweg proportional zum übertragenen Moment verhält, kann die Bremse von der Elektronik genau zu dem Zeitpunkt gelöst werden, wenn die Kupplung das erforderliche Moment aufbringt, das nötig ist, um das Fahrzeug an der aktuellen Steigung zu halten. Da alle notwendigen Informationen bereits in der Getriebesteuerung vorhanden sind, ist diese Ausführungsform der Erfindung ohne zusätzliche Sensoren kostengünstig darstellbar.

Vorteilhafte und zweckmäßige Ausgestaltungen der Erfindung sind in den Unteransprüchen angegeben. Die Erfindung ist aber nicht auf die Merkmalskombinationen der Ansprüche beschränkt, vielmehr ergeben sich für den Fachmann weitere sinnvolle Kombinationsmöglichkeiten von Ansprüchen und einzelnen Anspruchsmerkmalen aus der Aufgabenstellung.

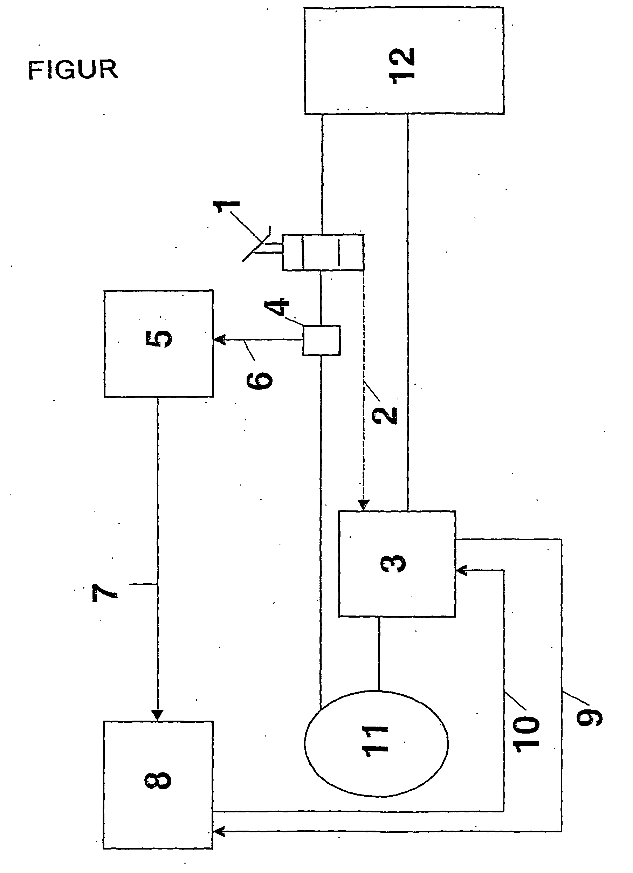

Nachfolgend wird die Erfindung anhand eines in der Figur dargestellten Ausführungsbeispieles näher erläutert.

Die einzige Figur zeigt eine schematische Darstellung eines erfindungsgemäßen Verfahrens und einer erfindungsgemäßen Vorrichtung zum Verhindern eines unbeabsichtigten Wegrollens eines stillstehenden Fahrzeuges unter Verwendung eines EBS-Systems. Wird ein Bremspedal 1 betätigt, so wird eine Bremspedalposition 2 an ein EBS 3 weitergeleitet. Über einen Bremslichtschalter 4 wird durch eine Motorsteuereinheit 5 ein Signal 6 übermittelt, welches als CAN-Signal 7 an eine Getriebesteuereinheit 8 übermittelt wird. Vom EBS 3 wird weiterhin über ein CAN-Signal 9 die Bremspedalposition 2 an die Getriebesteuereinheit 8 übermittelt. Die Getriebesteuereinheit 8 gibt dem EBS 3 ein Signal 10 zur Aktivierung eines Haltemodus, durch den ein Bremsdruck einer Bremse 11 verändert werden kann. In einem Ersatzbremskreis kann durch Betätigung des Bremspedals 1 die Bremse 11 auch über einen Speicher 12 aktiviert werden.

### Bezugszeichen

- 1: Bremspedal
- 2: Bremspedalposition
- 3: EBS
- 4: Bremslichtschalter
- 5: Motorsteuereinheit
- 6: Signal
- 7: CAN-Signal
- 8: Getriebesteuereinheit
- 9: CAN-Signal
- 10: CAN-Signal
- 11: Bremse
- 12: Speicher

## Patentansprüche

1. Verfahren zum Verhindern eines unbeabsichtigten Wegrollens eines stillstehenden Fahrzeuges, bei dem bei stillstehendem Fahrzeug, Getriebestellung nicht Neutral und Betätigung eines Bremspedals (1) einer Bremse (11) ein Haltemodus aktiviert wird, wobei die Bremse (11) abhängig vom Weg einer Kupplung, der ein Maß für das aktuelle Übernahmemoment der Kupplung ist, geöffnet und **dadurch** der Haltemodus deaktiviert werden kann, **dadurch gekennzeichnet, dass** der Haltemodus der Bremse (11) über ein Zeitfenster eingestellt wird, so dass die Breme gelöst wird, wenn für eine vorher definierte Zeitspanne kein Bremspedal betätigt wird.

2. Verfahren zum Verhindern eines unbeabsichtigten Wegrollens eines stillstehenden Fahrzeuges nach Anspruch 1, **dadurch gekennzeichnet, dass** der Haltemodus sowohl ein Ventil über einen Digitalausgang ansteuern, als auch eine CAN-Botschaft (10) generieren kann.

3. Verfahren zum Verhindern eines unbeabsichtigten Wegrollens eines stillstehenden Fahrzeuges nach Anspruch 1, **dadurch gekennzeichet, dass** aus einer Getriebesteuereinheit (8) eine Kenngröße bestimmt werden kann, die den Haltemodus fahrzeugspezifisch deaktiviert und die Bremse (11) erst dann öffnet, wenn die Kupplung das erforderliche Moment zum Halten des Fahrzeuges aufbringen kann.

## Claims

1. The invention concerns a method for the prevention of unintended rolling of a standing vehicle and involves activation of a holding mode in a standing vehicle, the transmission of which is not in Neutral, through activation of a brake pedal (1) of a brake, with release of the brake (11) and thus deactivation of the holding mode being dependent on the travel of a clutch, with such travel being a measure for the transition torque of the clutch, **characterized in that** the holding mode of the brake (11) is set via a time window, so that the brake is released if the brake pedal is not activated within a predefined period.

2. A method for the prevention of unintended rolling of a standing vehicle according to claim 1, **characterized in that** the holding mode can control a valve via a digital output and also generate a CAN message (10).

3. A method for the prevention of unintended rolling of a standing vehicle according to claim 1, **characterized in that** a transmission control unit (8) allows determination of a variable for vehicle-specific deactivation of the holding mode, with the brake (11) not being released before the clutch can provide the torque required to hold the vehicle.

## Revendications

1. Procédé pour empêcher qu'un véhicule à l'arrêt ne se mette à rouler involontairement, dans lequel un mode de retenue est activé lorsque le véhicule est à l'arrêt, que la position de la boîte de vitesses n'est pas le point mort et qu'on actionne une pédale de frein (1) d'un frein (11), et dans lequel le frein (11) peut être desserré, et le mode de retenue ainsi désactivé, en fonction de la course d'un embrayage qui est une mesure pour la valeur actuelle du couple de prise en charge de l'embrayage, **caractérisé en ce qu'**on règle le mode de retenue du frein (11) sur une fenêtre de temps, de telle sorte que le frein se desserre lorsque aucune pédale de frein n'est actionnée pendant un laps de temps défini antérieurement.

2. Procédé pour empêcher qu'un véhicule à l'arrêt ne se mette à rouler involontairement selon la revendication 1, **caractérisé en ce que** le mode de retenue peut aussi bien commander une soupape par l'intermédiaire d'une sortie numérique que générer un message CAN (10).

3. Procédé pour empêcher qu'un véhicule à l'arrêt ne se mette à rouler involontairement selon la revendication 1, **caractérisé en ce qu'**une grandeur caractéristique, qui peut être tirée d'une unité de commande de boîte de vitesses (8), désactive le mode de retenue d'une façon particulière au véhicule et desserre le frein (11) seulement à un moment où l'embrayage est capable de transmettre le couple nécessaire pour retenir le véhicule.
